# EUROPÄISCHE PATENTSCHRIFT

(11) **EP 3 377 321 B1**
(45) Veröffentlichungstag und Bekanntmachung des Hinweises auf die Patenterteilung: **20.04.2022**
(21) Anmeldenummer: 16816572.8
(22) Anmeldetag: 16.11.2016
(51) Int. Cl.: B22F 10/28, B22F 12/42, B22F 12/13, B33Y 10/00

(54) **VERFAHREN FÜR 3D-DRUCK MIT ENGEM WELLENLÄNGENSPEKTRUM**
METHOD FOR 3D PRINTING WITH A NARROW WAVELENGTH SPECTRUM
PROCÉDÉ POUR L'IMPRESSION 3D AVEC UN SPECTRE DE LONGUEURS D'ONDES ÉTROIT

(30) Priorität: 20.11.2015 DE 102015014964
(43) Veröffentlichungstag der Anmeldung: 26.09.2018
(73) Patentinhaber: voxeljet AG, 86316 Friedberg (DE)
(72) Erfinder: GÜNTHER, Daniel, 81371 München (DE); SCHECK, Christoph, 86154 Augsburg (DE); BRÜLLER, Lisa, 86156 Augsburg (DE); REEVERS, James, Melton Mowbray, Leicestershire LE14 4BA (GB)
(74) Vertreter: Helbig, Christian
(86) Internationale Anmeldenummer: PCT/DE2016/000399
(87) Internationale Veröffentlichungsnummer: WO 2017/084648

(56) Entgegenhaltungen:
- EP-A1- 3 365 153
- WO-A1-2005/090055
- GB-A- 2 422 344

## Beschreibung

Die Erfindung betrifft ein Verfahren zum Herstellen dreidimensionaler Modelle oder Formteile.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wird die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Energie- oder Strahlungsquelle selektiv verfestigt wird.

Im Folgenden werden alle diese Verfahren unter dem Begriff "dreidimensionale Druckverfahren" oder "3D-Druckverfahren" zusammengefasst.

Mit diesem Verfahren lassen sich verschiedene Partikelmaterialien, unter anderem auch polymere Werkstoffe, verarbeiten. Der Nachteil besteht hier jedoch darin, dass die Partikelmaterialschüttung eine gewisse Schüttdichte, die üblicherweise 60% der Feststoffdichte beträgt, nicht übersteigen kann. Die Festigkeit der gewünschten Bauteile hängt jedoch maßgeblich von der erreichten Dichte ab. Insofern wäre es hier für eine hohe Festigkeit der Bauteile erforderlich, 40% und mehr des Partikelmaterialvolumens in Form des flüssigen Binders zuzugeben. Dies ist nicht nur aufgrund des Einzeltropfeneintrages ein relativ zeitaufwändiger Prozess, sondern bedingt auch viele Prozessprobleme, die z.B. durch die zwangsläufige Schwindung der Flüssigkeitsmenge beim Verfestigen gegeben sind.

In einer anderen Form des 3D-Druckes, die unter dem Begriff "High-Speed-Sintering", abgekürzt HSS, in der Fachwelt bekannt ist, erfolgt die Verfestigung des Partikelmaterials über Eintrag von Infrarotstrahlung (IR-Strahlung). Das Partikelmaterial wird dabei physikalisch über einen Aufschmelzvorgang gebunden. Hierbei wird die vergleichsweise schlechte Aufnahme von Wärmestrahlung bei farblosen Kunststoffen ausgenutzt. Diese lässt sich durch Einbringen eines IR-Akzeptors oder Absorbers in den Kunststoff um ein Vielfaches steigern. Die IR-Strahlung kann dabei über verschiedene Möglichkeiten wie z.B. eine stabförmigen IR-Strahler eingebracht werden, die gleichmäßig über das Baufeld bewegt wird (Sinterstrahler). Die Selektivität wird über das gezielte und selektive Bedrucken der jeweiligen Schicht mit einem IR-Akzeptor erreicht.

An den Stellen, die bedruckt wurden, koppelt die IR-Strahlung dadurch wesentlich besser in das Partikelmaterial ein, als in den unbedruckten Bereichen. Dies führt zu einer selektiven Erwärmung in der Schicht über den Schmelzpunkt hinaus und damit zur selektiven Verfestigung in diesen Bereichen. Dieser Prozess wird z.B. in EP 1 740 367 B1 und EP 1 648 686 B1 beschrieben und im Folgenden mit der Bezeichnung HSS abgekürzt.

Vom Lasersinterprozess sind verschiedene Materialien bekannt, die auch mit diesem Verfahren verarbeitet werden können. Dabei ist bei weitem das wichtigste Material Polyamid 12. Für dieses Material gibt es mehrere Hersteller. Es werden für Schichtbauverfahren ausgezeichnete Festigkeiten erzielt.

Das Material kann als feines Pulver bezogen werden, das direkt in dieser Qualität verarbeitet werden kann. Bedingt durch den Herstellungsprozess fallen aber hohe Kosten an, die die Kosten für Standardpolyamid um den Faktor 20-30 übertreffen können.

Beim HSS-Prozess nach dem Stand der Technik wird das Pulver, genau wie beim Lasersintern, zur Verarbeitung auf eine Temperatur nahe des Schmelzpunktes des Materials gebracht. Dabei "altert" das Pulver und kann in Folgeprozessen nur noch bedingt eingesetzt werden. Es ergibt sich eine Recyclingquote, die wesentlich die Prozesskosten beeinflusst und verteuert.

Die Genauigkeit der Bauteile wird maßgeblich durch die Prozessführung beeinflusst. Dabei ist die Homogenität der Pulverbettdichte und Temperatur im Bauraum entscheidend.

Die Strahlungscharakteristik von konventionellen IR-Strahlern, die thermisch arbeiten, ist generell nicht als "monochromatisch" zu bezeichnen. Vielmehr besteht die Strahlung aus einem breiten kontinuierlichen Spektrum verschiedener Wellenlängen.

Für die entstehenden Wellenlängen muss ein entsprechender Absorber gefunden werden und dem selektiv einzudruckenden Material, auch als Tinte bezeichnet, zugegeben werden. Dies schränkt oft die Farbgebung der Tinte ein. Zudem ist die Auswahl oft begrenzt, so dass generell von einem schwachen Wirkungsgrad ausgegangen werden kann.

Zudem ist die Leistung der Strahlungsquelle mit der Temperatur des Filaments oder Heizdrahtes und damit mit der emittierten Wellenlänge untrennbar verbunden. Dies beschreibt das Stefan-Boltzmann-, sowie das Wiensche Verschiebungs-Gesetz. Damit muss bei einer Skalierung der Leistung die Verschiebung der Wellenlänge mit berücksichtigt werden. Weiterhin tritt bevorzugt im fernen IR-Bereich Sekundärstrahlung auf, da Filament- bzw. Heizdraht-Umhausung wie z.B. Quarzglaskörper ebenfalls erhitzt werden und damit selbst zu Emittern werden. In genau diesem Wellenlängenbereich weisen Polymere in der Regel Absorptionsmaxima auf.

Im sichtbaren Bereich in dem es ausgezeichnete Absorber für unterschiedliche Wellenlänge (Farben) gibt, weisen thermisch arbeitende erhebliche IR-Anteile auf, die nicht selektiv erwärmen und damit im Sinne des Prozesses unkontrolliert das unbedruckte Pulver erhitzen. Das Ziel, beide Flächentypen - bedruckt und unbedruckt - gezielt beeinflussen zu können, kann nur eingeschränkt erreicht werden.

Jede unkontrollierte Erwärmung stellt eine Abwärmequelle dar. Solche Quellen vermindern den Wirkungsgrad der Vorrichtung und aufgrund der empfindlichen Prozessführung auch die Leistungsfähigkeit des 3D-Druckverfahrens.

WO 2005/090055 A1 offenbart ein Verfahren zum Herstellen von 3D-Formteilen nach dem Oberbegriff von Anspruch 1 der vorliegenden Erfindung.

Aufgabe der Erfindung ist es, ein Verfahren bereitzustellen, die die Nachteile des Standes der Technik vermindert oder ganz vermeiden hilft. Ein weitere Aufgabe der Erfindung ist es das Verfahren so zu gestalten, dass die Erwärmung der Flächentypen "bedruckt und unbedruckt" gezielt vorgenommenwerden können.

Diese Aufgabe wird erfindungsgemäß gelöst durch ein Verfahren zum Herstellen von 3D-Formteilen, wobei partikelförmiges Baumaterial in einer definierten Schicht mittels Beschichter auf ein Baufeld aufgetragen wird, selektiv eine oder mehrere Flüssigkeiten oder Partikelmaterial eines oder mehrerer Absorber aufgebracht werden, mit geeigneten Mitteln ein Energieeintrag erfolgt und so eine selektive Verfestigung der mit Absorber bedruckten Bereiche bei einer Verfestigungstemperatur oder Sintertemperatur oberhalb der Schmelztemperatur des Pulvers erfolgt, das Baufeld um eine Schichtstärke abgesenkt oder der Beschichter um eine Schichtstärke angehoben wird, diese Schritte wiederholt werden bis das gewünschte 3D-Formteil erzeugt ist, dadurch gekennzeichnet, dass der Energieeintrag von bedruckten durch einen Sinterstrahler mittels LED in einem engen Wellenlängenspektrum mit der Breite von 0,2 µm bis 0,1 µm erfolgt.

Erfindungsgemäß wird diese Aufgabe weiterhin dadurch gelöst, dass LED Strahlungsquellen als Sinterstrahler eingesetzt werden, die eine als im wesentlichen monochromatisch zu charakterisierende Wellenlänge aufweisen. Dies können spezielle LED-Lichtquellen sein. Diese Strahlertypen weisen eine sehr enge spektrale Verteilung auf. Entsteht beim Strahlungserzeugungsprozess zusätzlich Wärmestrahlung, kann diese über Kühlung reduziert werden.

Ebenfalls Teil der Offenbarung, aber nicht Teil der vorliegenden Erfindung, ist die Verwendung einer mittels nicht zwingend monochromatischen Lichtquelle beleuchteten Fläche, welche durch ein fluoreszierendes Material gekennzeichnet ist, das dann monochromatische Strahlung emittiert. Dies hat den Vorteil, gezielt Wellenlängen einzusetzen, die mittels marktüblicher monochromatischer Lichtquellen nicht zugänglich und/oder deren Einsatz nicht praktikabel ist. Des Weiteren kann dadurch eine bessere Gleichmäßigkeit der Intensität der abgegebenen Strahlung bezogen auf die Fläche erreicht werden.

Aufgrund des Einsatzes von LED Strahlungsquellen mit einem engen Wellenlängenspektrum erhöht sich weiterhin die Auswahl an für die Strahlung transparenter Materialien. Dies schließt marktübliche Materialien mit ein, die als Diffusor eingesetzt werden können, um damit die Strahlungsgleichmäßigkeit ebenfalls zu maximieren.

Die Beleuchtung mit höherenergetischer Strahlung nach der Offenbarung ist dadurch zugänglich, was die Eindringtiefe in die Pulverschicht erhöht. Der Verbund der einzelnen im Schichtaufbauverfahren teilgeschmolzenen Flächen lässt sich somit steigern, was der Festigkeit der herzustellenden Formteile zu Gute kommt Der Einsatz beschriebener Strahlungsquellen ermöglicht nicht nur die Reduzierung des Strahlerabstandes zur Fläche, sondern auch der Strahlergröße wodurch sich kompaktere Maschinengeometrien realisieren lassen und sich die Energieeffizienz in erheblichen Maße steigernlässt.

Eine bei konventionellen Strahlungsquellen im sichtbaren bzw. InfrarotBereich auftretende Aufheiz- bzw. Abkühlzeit der Strahler entfällt, womit sich der Schichtaufbauprozess erheblich beschleunigen ließe. Eine stark erhöhte Alterung konventioneller Strahlungsquellen aufgrund häufiger Aufheiz- und Abkühlprozesse entfällt ebenfalls.

Aufgrund der wegfallenden Reaktionsträgheit ist ein selektives An- bzw. Abschalten der Strahlungsquellen während einer Überfahrt über die zu bestrahlende Fläche möglich, z.B. nach einem Matrixverfahren.

Damit können die Temperaturen der Flächen gezielt eingestellt werden. Die Abwärmeverluste werden begrenzt und damit der Gesamtwirkungsgrad der Vorrichtung erhöht. Dies kann insbesondere bei Maschinen mit temperaturempfindlichen Komponenten von Vorteil sein, da der Maschinenraum an sich kälter gehalten werden kann.

Unter Betrachtung von Sicherheitsaspekten wie Brandschutz sind die erwähnten Verbesserungen aufgrund der erheblich reduzierten Hitzeentwicklung ebenfalls von großem Vorteil. Die Alterung bzw. Degradierung des verwendeten Partikelmaterials aufgrund hoher Temperaturen lässt sich außerdem an nicht zu verfestigenden Flächen weiter reduzieren und die Entnahme der verfestigten Stellen nach dem Abkühlprozess vereinfachen.

Da die Strahlerleistung nicht mit der Wellenlänge gekoppelt ist, kann die Leistung der Vorrichtung problemlos gesteigert werden. Der Prozess an sich bleibt davon unberührt.

Einige der beschriebenen Vorteile lassen sich ebenfalls durch den Einsatz nicht-monochromatischer Lichtquellen erreichen, sofern diese einen genügend engen Bereich aufweisen und bei höheren Temperaturen als handelsüblich betrieben werden können. Dadurch reduziert sich die Bandbreite der emittierten Strahlung, wie dem Planckschen Strahlungsgesetz entnommen werden kann. Eine geringe Größe würde eine gleichmäßigere Bestrahlung ermöglichen und ebenfalls das Aussparen nicht zu verfestigender Flächen erlauben, insbesondere weil sich An- und Abschaltzeiten mit steigender Emittertemperatur verkürzen.

Die geringere Verlustleistung und Größe der beschriebenen Strahler ermöglicht eine verschachtelte Bauweise von Emittern verschiedener Wellenlängen, ohne die Gleichmäßigkeit der Strahlungsintensität bezogen auf die Fläche aufgeben zu müssen. Ein Aufbau mit Emittern auch dreier verschiedener Wellenlängen ist möglich.

Mit der Schmalbandigkeit der Emitter können in einem Aspekt der Erfindung selektiv einzelne Bestandteile des Aktivators gezielt angeregt werden, insbesondere die Trägerflüssigkeit. Dadurch lassen sich Flüssigkeitsanteile unmittelbar nach Auftrag evaporieren, sodass diese nicht im herzustellenden Formteil zurück bleiben.

Die wesentlich zielgerichtetere Temperatursteuerung nach der Offenbarung ermöglicht bei selektivem Flüssigkeitsauftrag ein und desselben Absorbers, durch die aufgetragene Menge gesteuert, unterschiedliche Temperaturen zu erzielen, sodass bei gleichzeitiger Verwendung zweier verschiedener Partikelmaterialien mit unterschiedlichen Sintertemperaturen in einer Mischung gezielt ein Partikelmaterialtypteilgeschmolzen werden kann, wobei der andere unverändert bleibt. Dadurch lässt sich über die Absorbermenge die Formkörpereigenschaft gezielt beeinflussen.

Im Folgenden werden einige Begriffe der Erfindung näher erläutert. "Formkörper" oder "Bauteil" im Sinne der Erfindung sind alles mittels des erfindungsgemäßen Verfahrens hergestellte dreidimensionale Objekte, die eine Formfestigkeit aufweisen.

"Bauraum" ist der geometrische Ort in dem die Partikelmaterialschüttung während des Bauprozesses durch wiederholtes Beschichten mit Partikelmaterial wächst oder durch den die Schüttung bei kontinuierlichen Prinzipien hindurchläuft. Im Allgemeinen wird der Bauraum durch einen Boden, die Bauplattform, durch Wände und eine offene Deckfläche, die Bauebene, begrenzt. Bei kontinuierlichen Prinzipien existieren meist ein Förderband und begrenzende Seitenwände.

Die "Aufheizphase" kennzeichnet ein Erwärmen der Vorrichtung zu Beginn des Verfahrens. Die Aufheizphase ist abgeschlossen, wenn die Solltemperatur der Vorrichtung stationär wird.

Die "Abkühlphase" ist mindestens solange andauernd, bis die Temperatur so niedrig ist, dass die Bauteile keine merklichen plastischen Deformationen beim Entnehmen aus dem Bauraum erfahren.

Als "Partikelmaterialien" können alle für den Pulver-basierten 3D Druck bekannten Materialien verwendet werden, insbesondere Polymere, Keramiken und Metalle. Möglich sind auch Partikelmaterialien aus Materialgemischen oder Composite aus unterschiedlichen Materialien, weiterhin Partikelmaterialien auf Basis von nachwachsenden Rohstoffen wie beispielsweise Cellulosefasern oder Holzpulver. Das Partikelmaterial ist vorzugsweise ein trocken frei fließendes Pulver, es kann aber auch ein kohäsives schnittfestes Pulver oder eine partikelbeladene Flüssigkeit verwendet werden. In dieser Schrift werden Partikelmaterial und Pulver synonym verwendet.

Der "Aktivator" oder "Absorber" ist im Sinne dieser Erfindung ein mit einem Tintenstrahldruckkopf oder mit einer anderen matrixartig arbeitenden Vorrichtung verarbeitbares Medium, das die Absorption von Strahlung zur lokalen Erwärmung des Pulvers fördert. Der "Absorber" kann auch partikelförmig sein wie beispielsweise schwarzer Toner. Absorber können gleichmäßig oder in unterschiedlichen Mengen selektiv aufgebracht werden. Bei Aufbringen in unterschiedlichen Mengen kann man somit die Festigkeit in dem Baumaterial steuern und selektiv unterschiedliche Festigkeiten erzielen, beispielsweise in dem herzustellenden Formteil. Der Bereich der Festigkeit reicht von einer Festigkeit wie im Bauteil selbst bis zu eine Festigkeit, die nur unwesentlich über der des Baumaterials ohne Absorberaufdruck liegt. Damit wird es möglich eine Temperaturregulierung in dem Baufeld/Bauraum vorzunehmen und wenn gewünscht den Mantel, der der Temperaturregulierung dient, auch leicht um das hergestellte Bauteil zu entfernen.

"IR-Erwärmung" bedeutet in dieser Schrift speziell eine Bestrahlung des Baufeldes mit einem IR-Strahler. Dabei kann der Strahler ebenso statisch sein oder mit einer Verfahreinheit über das Baufeld bewegt werden. Durch den Einsatz des Aktivators führt die IR-Erwärmung im Baufeld zu unterschiedlich starken Temperaturanstiegen.

"Strahlungserwärmung" verallgemeinert den Begriff IR- Erwärmung. Durch die Absorption von Strahlung beliebiger Wellenlänge kann sich ein Festkörper oder eine Flüssigkeit erwärmen.

Mit "Flächentyp" wird die Differenzierung zwischen mit Absorber unbedruckten und bedruckten Bereichen zum Ausdruck gebracht.

Ein "IR-Strahler" ist eine Quelle von infraroter Strahlung. Dabei werden meist glühende Drähte in Quarz oder Keramikgehäusen zur Erzeugung der Strahlung benutzt. Je nach eingesetzten Materialien ergeben sich unterschiedliche Wellenlängen der Strahlung. Die Wellenlänge ist bei diesem Strahlertyp zusätzlich abhängig von der Leistung.

Eine "Strahlungsquelle" gibt generell Strahlung mit einer bestimmten Wellenlänge oder einen Wellenlängenbereich ab. Eine Strahlungsquelle mit nahezu monochromatischer Strahlung wird als "monochromatischer Strahler" bezeichnet. Eine Strahlungsquelle wird auch als "Emitter" bezeichnet. Im Sinne der Erfindung werden Strahler mit einem engen Wellenlängenbereich verwendet, wobei ein Bereich von 0,2 bis 0,1 µm ist.

Eine "Overheadstrahler" im Sinne der Erfindung ist eine Strahlungsquelle die über dem Baufeld angebracht ist. Sie ist stationär kann aber in ihrer Strahlungsleistung reguliert werden. Sie sorgt im Wesentlichen für eine flächige nicht selektive Erwärmung.

Die "Sinterstrahler" ist eine Strahlungsquelle, die das Prozesspulver über seine Sintertemperatur erhitzt. Sie kann stationär sein. In bevorzugten Ausführungen wird sie aber über das Baufeld bewegt. Im Sinne dieser Erfindung ist der Sinterstrahler als monochromatischer Strahler ausgeführt.

"Sintern" ist der Begriff für das partielle Zusammenwachsen der Partikel im Pulver. Mit dem Sintern verbunden ist bei diesem System der Aufbau von Festigkeit.

Der Begriff "Sinterfenster" bezeichnet die Differenz der Temperatur des beim ersten Aufheizen des Pulvers auftretenden Schmelzpunktes und dem bei anschließendem Abkühlen auftretenden Erstarrungspunktes.

Die "Sintertemperatur" ist die Temperatur ab der das Pulver erstmalig aufschmilzt und sich verbindet.

Unterhalb der "Rekristallisationstemperatur" wird einmal aufgeschmolzenes Pulver wieder fest und schwindet deutlich.

Die "Packungsdichte" beschreibt die Ausfüllung des geometrischen Raumes durch Feststoff. Sie hängt von der Natur des Partikelmaterials und der Auftragsvorrichtung ab und ist eine wichtige Ausgangsgröße für den Sinterprozess. In den meisten Fällen beträgt die Packungsdichte nicht 100% und es befinden sich Hohlräume zwischen den Partikeln des Partikelmaterials und eine gewisse Porosität ist beim Aufbringen des Partikelmaterials und im fertigen Formteil vorhanden.

Der Begriff "Schwindung" bezeichnet den Vorgang der geometrischen Verkürzung einer Abmessung eines geometrischen Körpers infolge eines physikalischen Vorganges. Beispielhaft ist das Sintern von nicht ideal gepackten Pulvern ein Vorgang der eine Schwindung relativ auf das Anfangsvolumen mit sich bringt. Einer Schwindung kann eine Richtung zugeordnet werden.

"Deformation" tritt auf, wenn der Körper bei einem physikalischen Prozess eine ungleichmäßige Schwindung erfährt. Diese Deformation kann reversibel oder irreversibel sein. Die Deformation wird oft auf die globale Geometrie des Bauteils bezogen.

Als "Curling" wird in dieser Schrift ein Effekt bezeichnet, der vom schichtweisen Vorgehen bei der beschriebenen Erfindung kommt. Dabei sind jeweils kurz nacheinander erzeugte Schichten einer unterschiedlichen Schwindung ausgesetzt. Durch physikalische Effekte deformiert sich der Verbund dann in einer Richtung, die nicht mit der Richtung der Schwindung zusammenfällt.

Der "Grauwert" bezeichnet die in das Pulver eingedruckte Aktivatormenge. Dabei können erfindungsgemäß verschiedene Grauwerte auf das Baufeld aufgedruckt werden, um unterschiedliche Erwärmungsgrade zu erzielen.

Als "Partikelmaterialien" oder "partikelförmige Baumaterialien" oder "Baumaterialien" können alle für den Pulver-basierten 3D Druck bekannten Materialien verwendet werden, insbesondere Polymere, Keramiken und Metalle. Das Partikelmaterial ist vorzugsweise ein trocken frei fließendes Pulver, es kann aber auch ein kohäsives schnittfestes Pulver oder eine partikelbeladene Flüssigkeit verwendet werden. In dieser Schrift werden Partikelmaterial und Pulver synonym verwendet.

Der "Partikelmaterialauftrag" ist der Vorgang bei dem eine definierte Schicht aus Pulver erzeugt wird. Dies kann entweder auf der Bauplattform oder auf einer geneigten Ebene relativ zu einem Förderband bei kontinuierlichen Prinzipen erfolgen. Der Partikelmaterialauftrag wird im Weiteren auch "Beschichtung" oder "Recoaten" genannt.

"Selektiver Flüssigkeitsauftrag" kann im Sinne der Erfindung nach jedem Partikelmaterialauftrag erfolgen oder je nach den Erfordernissen des Formkörpers und zur Optimierung der Formkörperherstellung auch unregelmäßig, beispielsweise mehrfach bezogen auf einen Partikelmaterialauftrag, erfolgen. Dabei wird ein Schnittbild durch den gewünschten Körper aufgedruckt. Im Zusammenhang mit der vorliegenden Erfindung kann der Absorber in einer Flüssigkeit oder Tinte als Träger- oder Druckmittel aufgenommen, dispergiert oder gelöst sein.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile bei kontinuierlichen Verfahren, Dosiervorrichtungen und Wärme- und Bestrahlungsmittel und andere dem Fachmann bekannte Bauteile, die deshalb hier nicht näher ausgeführt werden.

Die "Absorption" bezeichnet die Aufnahme der Wärmeenergie von Strahlung durch das Baumaterial. Die Absorption ist abhängig vom Pulvertyp und der Wellenlänge der Strahlung.

Der "Träger" bezeichnet das Medium in dem der eigentliche Absorber vorhanden ist. Es kann sich um ein Öl, ein Lösemittel oder allgemein um eine Flüssigkeit handeln. Hierzu wird auch auf den Begriff "selektiver Flüssigkeitsauftrag" verwiesen.

"Strahlungsinduzierte Erwärmung" bedeutet im Folgenden eine Bestrahlung des Baufeldes mit festen oder beweglichen Strahlungsquellen. Der Absorber ist auf die Strahlungsart abgestimmt und vorzugsweise optimiert. Dabei soll es zu einer unterschiedlich starken Erwärmung von "aktiviertem" und nicht "aktiviertem" Pulver kommen. "Aktiviert" bedeutet, dass durch den Absorbereindruck die Temperatur in diesen Bereichen erhöht wird im Vergleich zu den übrigen Bereichen im Bauraum. "Basistemperatur" im Sinne der Erfindung ist die Temperatur, die im Bauraum auf der Oberfläche des Partikelmaterials und in dem aufgedruckten Partikelmaterial mit geeigneten Mitteln, z.B. einem IR-Strahler, eingestellt wird. Dabei wird die Basistemperatur so gewählt, dass sie bezogen auf das Partikelmaterial und in Zusammenspiel mit dem Absorber geeignet ist, um das selektive Verfestigen mit positiven Materialeigenschaften zu erreichen.

Das Baumaterial wird immer in einer "definierten Schicht" oder "Schichtstärke" aufgebracht, die je nach Baumaterial und Verfahrensbedingungen individuell eingestellt wird. Sie beträgt beispielsweise 0,05 bis 0,5 mm, vorzugsweise 0,1 bis 0,3 mm.

Die der Erfindung zugrunde liegende Aufgabe wird durch ein Verfahren gelöst, welches dadurch gekennzeichnet ist, dass die im wesentlichen monochromatische Strahlung ausgewählt wird oder erzeugt wird durch eine oder mehrere LED-Lichtquellen in einem engen Wellenlängenspektrum mit einer Breite von 0,2 µm bis 0,1 µm.

Die Temperaturführung in dem erfindungsgemäßen Verfahren kann je nach Anforderungen und konstruktiven Merkmalen der verwendeten 3D-Druckvorrichutng in unterschiedlicher Weise ausgeführt werden. So kann ein Overheadstrahler oder/und ein Sinterstrahler zum Einsatz kommen. Andererseits kann das Verfahren dadurch gekennzeichnet sein, dass ein Overheadstrahler für eine Grunderwärmung und ein Sinterstrahler für die Erwärmung der bedruckten Flächen über die Schmelztemperatur verwendet werden.

Vorzugsweise wird das Verfahren so durchgeführt, dass ein Sinterstrahler, der eine Wellenlänge für die Erwärmung der bedruckten Flächen über die Schmelztemperatur aufweist, und der eine Wellenlänge für die Erwärmung der unbedruckten Flächen über die Rekristallisationstemperatur aufweist, verwendet wird, wobei vorzugsweise kein statischer Overheadstrahler verwendet wird oder dass ein statischer Overheadstrahler, der eine Wellenlänge für die Erwärmung der bedruckten Flächen über die Schmelztemperatur aufweist, und der eine Wellenlänge für die Erwärmung der unbedruckten Flächen über die Rekristallisationstemperatur aufweist, verwendet wird, wobei vorzugsweise kein beweglicher Sinterstrahler verwendet wird.

Im weiteren kann das Verfahren dadurch gekennzeichnet sein, dass die Leistung der jeweiligen Elemente verstellt werden kann und eine Regelung der jeweiligen Erwärmung erfolgen kann.

In einem weiteren Aspekt kann das Verfahren dadurch gekennzeichnet sein, dass zur gezielten Erwärmung von bedruckten und unbedruckten Flächen selektives An- bzw. Abschalten der Strahlungsquellen während einer Überfahrt über die Baufläche vorgenommen wird oder/und dass selektives An- bzw. Abschalten von stationären Strahlungsquellen vorgenommen wird.

Als Absorber kann jedes geeignete und mit den anderen Verfahrensbedingungen komnpatible Absorbermittel, -gemisch alleine oder in Kombination mit einem Tragermittel oder weitern Bestandteilen verwendet werden. Vorzugsweise ist der Absorber eine Flüssigkeit, vorzugsweise eine ölbasierte Tinte, die Kohlenstoffpartikel enthält, z.B. XAAR IK821.

Als ein partikelförmiges Baumaterial wird ein mit den übrigen Komponenten verwendbares Maumaterial verwendet, vorzugsweise mit einer mittleren Körngröße von 50 - 60 µm, vorzugsweise 55 µm, einer Schmelztemperatur von 180 - 190 °C, vorzugsweise von 186 °C und/oder einer Rekristallisationstemperatur von 140 - 150 °C, vorzugsweise von 145 °C verwendet wird, vorzugsweise ein Polyamid12, mehr bevorzugt PA2200^{®} oder Vestosint1115^{®} .

Bei Durchführung des Verfahrens findet eine Erhitzung derart statt, dass nur die mit Absorber bedruckten Bereiche sich durch partielles Schmelzen oder Sintern verbinden, wobei das Baumaterial als Pulver oder als Dispersion verwendet wird, oder/und wobei das Baufeld und/oder das aufgetragene Baumaterial temperiert werden, oder/und wobei der Absorber strahlungsabsorbierende Bestandteile, Weichmacher für das partikelförmige Baumaterial oder/und ein oder mehrere Stoffe zur Störung der Rekristallisierung umfasst.

Im weiteren ist das Verfahren dadurch gekennzeichnet, dass die Menge des oder der Absorber über Graustufen des Druckkopfes oder Ditheringverfahren reguliert wird.

Das selektiv aufgebrachte Mittel wird mit geeigneten Mitteln aufgetragen und in einer geeigneten und notwendigen Menge, wobei vorzugsweise die Flüssigkeit mittels eines oder mehrerer Druckköpfe selektiv aufgebracht wird, vorzugsweise wobei der oder die Druckköpfe in ihrer Tropfenmasse einstellbar sind, oder/und wobei der oder die Druckköpfe die Flüssigkeit in einer oder in beiden Verfahrrichtungen selektiv aufbringen, oder/und wobei das partikelförmige Baumaterial selektiv verfestigt, vorzugsweise selektiv verfestigt und gesintert wird.

Im Folgenden wird die Erfindung in ihren verschiedenen Aspekten beschrieben.

Die zentrale Aufgabenstellung die jeweiligen Flächentypen gezielt zu erwärmen wird vorzugsweise über den Einsatz von monochromatischen Strahlungsquellen erreicht.

Das Verfahren nach dem Stand der Technik besteht aus den Schritten Schichterzeugen, Bedrucken, Belichten mit Strahlung und Absenken. Der erste Schritt ist analog zur Schichtbildung beim bekannten pulverbasierten-3D-Drucken. Pulver wird vor eine Klinge gebracht, auf eine Bauplattform aufgebracht und mit der Klinge glattgestrichen. Die Positionen der Bauplattform bei zwei aufeinanderfolgenden Beschichtungsvorgängen bestimmt dabei die Schichtstärke.

Im Anschluss wird die Schicht bedruckt. Beim hier genannten Verfahren werden Flüssigkeiten mit einem Tintenstrahldruckkopf aufgebracht. Ein Teil der Flüssigkeit ist ein Aktivator, der bei Einwirkung einer Strahlung lokal eine Erwärmung des Pulvers verursacht.

Die so bedruckte Schicht wird jetzt mit einer Strahlungsquelle überstrichen und damit selektiv erwärmt. Bei Einsatz einer thermischen Strahlungsquelle wird das komplette Pulver stark erhitzt. Besonders aber in aktivierten Bereichen steigt die Temperatur derart an, dass die Partikel zu Sintern beginnen. Bei Verwendung von Z LED Strahlen in einem engen Wellenlängenspektrum mit einer Breite von 0,2 µm bis 0,1 µm kann dieser Prozess besser gesteuert werden und gezielt auf die jeweiligen Flächentypen eingewirkt werden.

Nach diesem Schritt wird das Baufeld um eine Schichtstärke abgesenkt. Dann werden alle oben genannten Schritte wiederholt bis das gewünschte Bauteil entstanden ist.

Das Baufeld oder die unbedruckten Flächen werden auf einer Temperatur nahe der Sintertemperatur gehalten. Zu einen ist dann die Zusatzenergie zu Sinterung des Pulvers gering und kann durch sanft wirkende Mittel eingebracht werden. Zum anderen ist die das Bauteil umgebende Temperatur so hoch, dass während des fortschreitenden Bauprozesses auch in den Randbereichen des Bauteils die Temperatur nicht unter die Rekristallisationstemperatur fällt und somit die Schichtbildung gestört.

Zusätzlich zur Strahlungsquelle die das Baufeld überstreicht, kann optional eine zusätzliche stationäre Strahlungsquelle oberhalb des Baufeldes vorhanden sein. Sie wirkt jeweils, wenn das Baufeld nicht durch ein Aggregat, wie dem Beschichter oder dem Druckkopf, abgedeckt wird. Dieser sogenannte Overheadstrahler wird bevorzugt geregelt, sodass sich eine konstante Temperatur auf dem Baufeld einstellt. Beispielsweise kann ein Pyrometersensor verwendet werden, um den Temperatur-Istwert zu bestimmen. Der Overheadstrahler stellt in einer solchen Anordnung die zentrale Temperaturregelungskomponente dar.

Die Funktion des Overheadstrahlers ist die Regelung der Prozesstemperatur. Diese Regelung kann aber auch durch den Sinterstrahler realisiert werden. Dabei müssen für die Erwärmung von unbedruckten Flächen angepasste Strahler verwendet werden und deren Leistung gemäß der Erfordernisse des Prozesses geregelt werden. Ebenso müssen die bedruckten Bereiche mit einer Strahlung erwärmt werden, die für das Sintern und schwundarme Bauen notwendig sind.

Beide Strahlertypen Sinterstrahler und Overheadstrahler können beim Einsatz nach der Offenbarung von monochromatischen Lichtquellen also jeweils gegeneinander ersetzt werden. Insgesamt muss nur noch eine geeignete Strahlungsquelle, die beiden Flächentypen durch verschiedene diskrete Wellenlängen gerecht wird, eingesetzt werden. Diese kann über das Baufeld bewegt werden. Die Bewegung ist aber nicht zwingend. Dadurch können Anordnungen gefunden werden die wesentlich kürzere Schichtzeit ermöglichen. Fällt die Regelung über die Overheadstrhler weg, können die Vorgänge Drucken und Beschichten nahezu ohne Zeitverzögerung aneinander gereiht werden.

Durch dieses Verfahren können ebenso statische Strahlungspanele realisiert werden, die die Funktion der Overhead- und der Sinterstrahler vereinigen. Ist eine geometrische Bewegung der Strahlungsintensität geometrisch sinnvoll, können diese aus schaltbaren Blöcken zusammengesetzt werden. Beispielsweise können feldweise Strahler abgeschaltet werden um z.B. empfindliche Komponenten wie den Druckkopf bei dessen Fahrt zu schonen.

Die allgemein höheren Wirkungsgrade bei der Strahlungserzeugung und der Strahlungsabsorption führen zu niedrigeren Temperaturen in der Vorrichtung. Dies ist von Vorteil um empfindliche Komponenten zu schonen.

### Ausführungsformen nach der Erfindung

### Allgemeine, detaillierte Beschreibung zur Vorrichtung

Die zur Ausführung der Erfindung notwendige Vorrichtung ist eng an einen 3D-Drucker für das pulverbasierte Drucken angelehnt. Zusätzlich werden weitere Prozesseinheiten für das Temperieren und das Eindrucken der Prozessflüssigkeiten eingesetzt.

Zu Beginn des Verfahrens wird die gesamte Vorrichtung aufgeheizt. Dazu werden alle Heizelemente zur Steigerung der Temperatur benutzt. Die Aufheizphase ist abgeschlossen, wenn die Temperatur an allen Messstellen des Systems konstant bleibt.

Die einzelnen Heizsysteme einer bevorzugten Ausführung der Erfindung werden im Folgenden aufgeführt:
Die Bauplattform (102), auf der das Partikelmaterial im Prozess abgelegt wird und mit deren Hilfe die Schichtstärke der Schichten (107) eingestellt wird, kann über verschiedene Systeme beheizt werden. In einer bevorzugten Ausführung kommt eine elektrische Widerstandsheizung (504) zum Einsatz. Diese wird ebenso bevorzugt, auf Grund von Überlegungen zur Homogenität der Heizwirkung als flächige Heizfolie ausgeführt. Die Wirkung dieser Heizung wird über einen Sensor erfasst und geregelt. Der Sensor ist direkt mit der Bauplattform verbunden. Diese selbst ist zielführend aus Metall, vorzugsweise Aluminium, hergestellt. Eine Isolierung (506) deckt die Bauplattform (102) nach unten ab.

Ebenso kann die Bauplattform durch ein Fluid erhitzt werden. Dazu sind unterhalb der bevorzugt metallischen Bauplattform Heizwendeln (504) verbaut. Wiederum unterhalb befindet sich eine Isolierung (506) zur Homogenisierung der Heizwirkung.

Die Heizwendeln werden beispielsweise von einem Temperieröl durchströmt. Die Vorwahl der Öltemperatur ermöglicht eine exakte Einstellung der Temperatur. Ist der Durchfluss hoch genug und die Leistung angepasst, können auf diese Wiese sehr hohe Regelgüten der Temperatur erzielt werden.

Die Bauplattform (102) wird im sogenannten Baubehälter (110) bewegt. Dieser ist je nach Ausführung der Vorrichtung aus der Vorrichtung entnehmbar. Dadurch kann ein hoher zeitlicher Maschinennutzungsgrad erzielt werden, da während des Entpackens der Bauteile ein zweiter Baubehälter in der Vorrichtung verwendet werden kann.

Der Baubehälter (110) wird ebenso erhitzt. Es können die gleichen Techniken für die Bauplattform verwendet werden. Der Behälter selbst ist bevorzugt wieder aus Metall ausgeführt. Für eine gute Wärmeleitung bevorzugt Aluminium. Die eigentlich aktive Heizung (504) ist wieder mit einer Isolierung (503) hinterlegt. Damit kann die Wirkung gesteigert werden und die Homogenität erhöht werden.

Zwischen der Vorrichtung und dem Baubehälter gibt es zur Leistungsanbindung bevorzugt ein Stecksystem. Dies kann eine elektrische Verbindung beinhalten oder Steckverbinder für Flüssigkeit. Das nächste wesentliche Heizsystem einer erfindungsgemäßen Vorrichtung ist der Overheadstrahler (108). Sie ist erfindungsgemäß bevorzugt oberhalb des Baufeldes angebracht und strahlt senkrecht auf das Baufeld. Ebenso bevorzugt sind seitlich angebrachte Strahler, die in einem gewissen Winkel auf das Baufeld strahlen. Eine solche Konstruktion wird bevorzugt um die Abschattung durch den Beschichter oder den Druckkopf zu minimieren.

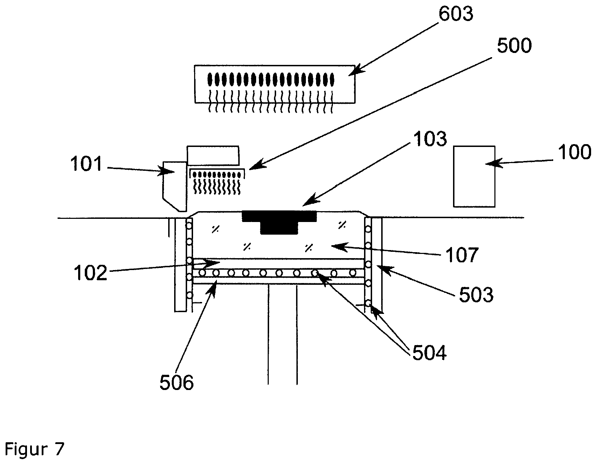

Der Overheadstrahler (108) kann nach der Erfindung mit Z LED Strahlern (603, Fig. 7) Z in einem engen Wellenlängenspektrum mit einer Breite von 0,2 µm bis 0,1 µm ausgestattet werden.

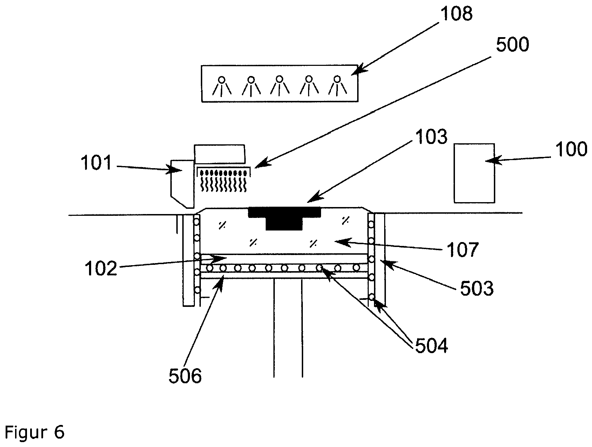

Die Auswahl wird je nach gewähltem Aktivator und der verfahrensbedingt besten Kombination passend zur Wellenlänge gewählt. Ebenso kann drei Overheadstrahler (108) aber nach der Offenbarung auch mit thermischen Strahlern ausgestattet sein (Fig. 6). Diese sollten dann eine möglichst geringe Selektivität aufweisen. Beispielweise können Keramikstrahler mit extrem großer Wellenlänge verwendet werden. Die gezielte Erwärmung der unterschiedlichen Flächentypen erfolgt dann durch den Sinterstrahler (109).

Verfahrensbedingt günstig ist es den Overheadstrahler (108) geregelt zu betreiben. Dazu kann bevorzugt ein Pyrometer (508) als Sensor verwendet werden. Das Pyrometer wird auf einen - durch die Steuerung sichergestellt nicht mit Aktivator bedruckten Randbereich - des Baufeldes gerichtet.

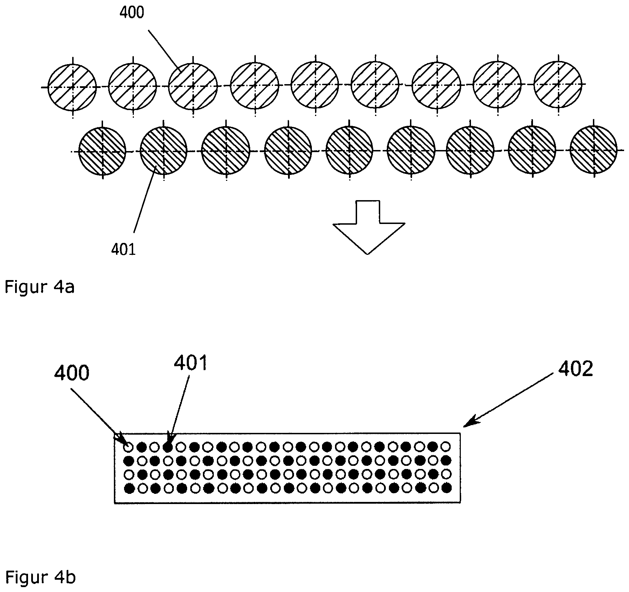

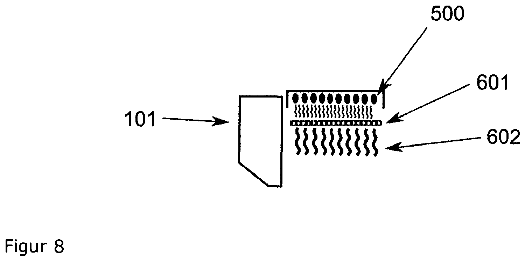

Das eigentliche Sintern wird in einer bevorzugten Ausführung der Erfindung durch eine mit dem Beschichter mitgeführten Sinterstrahler (109, 501) ausgeführt. Dieser erwärmt das Baufeld während des Überfahrens. Er kann verwendet werden, um das frisch bedruckte Pulver oder eine bereits überdeckte Pulverschicht zu erwärmen. Hier wird nach der Offenbarung eine monochromatische Strahlungsquelle (400) verwendet, die aber, nach der Offenbarung optional, auch mehrere diskrete Wellenlängen emittieren kann oder wahlweise aus Strahlern verschiedener Wellenlängen zusammen gesetzt sein (401, 402). Eine Verschachtelte Bauweise ist zu bevorzugen (Fig. 4a, 4b). Diese Strahlungsquelle kann aus Entladungslampen, LASER-Strahlungsquellen oder LED-Strahler aufgebaut sein. Eine weitere Möglichkeit bietet der Einsatz einer fluoreszierenden Fläche (601), die mittels einer nicht zwingend monochromatischen Strahlungsquelle (604) beleuchtet wird und dadurch monochromatische Strahlung (602) einer bestimmten Wellenlänge abgibt, die zur Absorption des Aktivators passen, Fig 8.

Das Pulver wird in einer bevorzugten Ausführung der Vorrichtung vor dem Aufbringen auf die schon bestehende Pulveroberfläche vorgewärmt, damit die Schicht nicht zu stark abgekühlt wird. Für diese Pulvervorwärmung eignet sich ebenso eine elektrische Widerstandsheizung (507) im Beschichter (101).

Grundsätzlich können alle Aggregate, die über Kontaktheizungen erwärmt werden, auch indirekt über Infrarotstrahlung erwärmt werden. Besonders bevorzugt nach der Offenbarung wird der Beschichter mit Strahlung erwärmt, wenn starke Vibrationen auftreten.

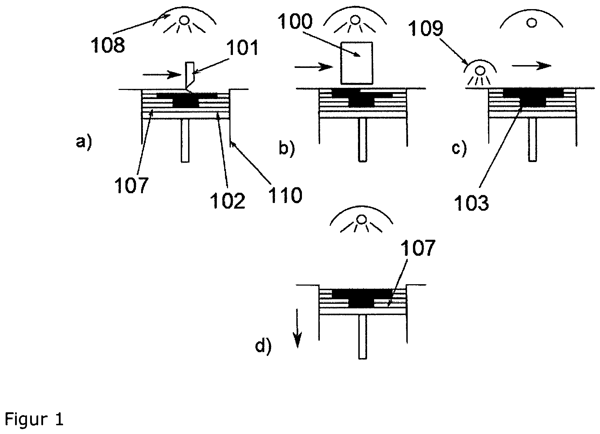

Bevorzugt wird mit der Vorrichtung nach der Aufheizphase folgende Reihenfolge von Verfahrensschritten realisiert: Auf der Bauplattform wird eine Pulverschicht vom Beschichter (101) erzeugt (Fig. 1a). Optional kann die neue Schicht je nach Bauform der Maschine dabei zusätzlich mit dem Sinterstrahler (109,501) erhitzt werden. Im Anschluss wird diese Schicht von einem (100) oder mehreren Tintenstrahldruckköpfen (100) (Fig 1b) bedruckt. Dann wird die Bauplattform (102) abgesenkt (1d). Nun wird die bedruckte Schicht mit der Sinterlampe (109.500) aufgewärmt und anschließend wieder mit Pulver abgedeckt.

Dieser Vorgang wird solange wiederholt, bis die Bauteile (103) im Baubehälter (110) fertiggestellt sind. Im Anschluss folgt die Abkühlphase. Diese findet bevorzugt im Baubehälter statt, der dann außerhalb der Vorrichtung mit Energie versorgt wird.

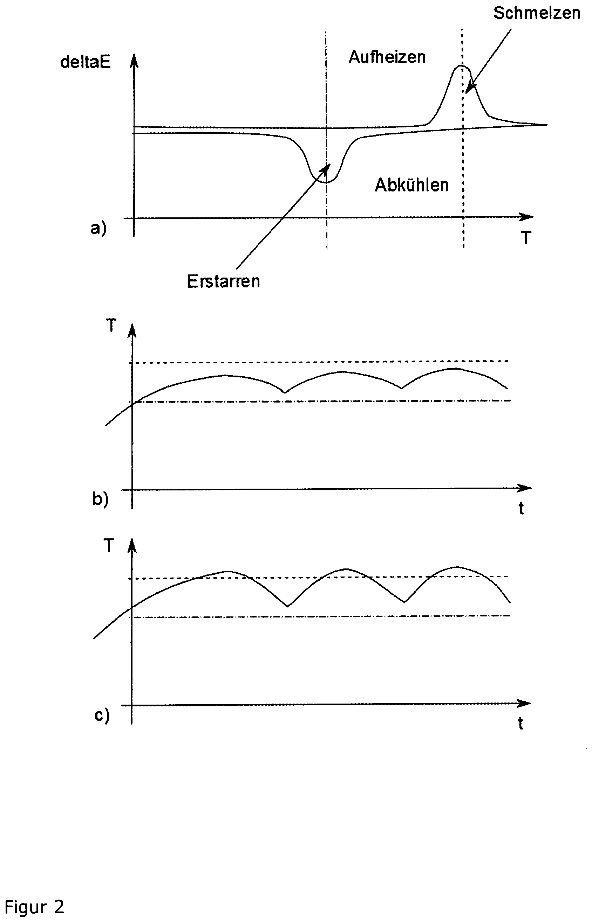

Fig. 2 gibt Temperaturdiagramme wieder. Dabei zeigt Figur 2a schematisch den Verlauf der vom Pulver abgegebenen Energie, wenn es in einem Zyklus erhitzt und wieder abkühlt wird. Bei der Aufheizung zeigt sich bei einer gewissen Temperatur eine starke Aufnahme von Energie. Hier schmilzt oder sintert das Material (Sintertemperatur). Für lasersintergeeignetes Polyamid 12 liegt diese Temperatur bei ca. 185°C. Bei der Abkühlung gibt es ebenfalls eine signifikante Stelle wesentlich unterhalb der Sintertemperatur (Rekristallisationstemperatur). Hier erstarrt das geschmolzene Material.

Den Verlauf von den Temperaturen während eines Prozesslaufes nach einem Verfahren gemäß dem Stand der Technik geben die Figuren 2b und 2c wieder. Figur 2b zeigt dabei den Verlauf der Temperatur auf der unbedruckten Fläche. Durch den Einsatz der Sinterstrahlungsquelle entstehen im eigentlich konstanten Verlauf Aufheiz- und Abkühlphasen. Im unbedruckten Bereich erreicht die Temperatur niemals die Sintertemperatur.

Figur 2c zeigt den Verlauf im bedruckten Bereich. Hier sind die Schwankungen stärker. Der Prozess wird mindestens so geführt, dass kurzzeitig die Sintertemperatur überschritten wird und so ein Teil des Pulvers aufgeschmolzen wird und aufgeschmolzen bleibt. Wird zu stark erhitzt schmilzt sämtliches Pulver in diesem Bereich und es kommt zu massiven Verzug. Eine zu starke Abkühlung des bedruckten Bereiches muss ebenfalls vermieden werden, da sonst die Rekristallisation einsetzt und dann sämtliche Schwindungen auf Grund der jetzt möglichen Kraftübertragung zu einem geometrischen Verzug (Curling) führen, der unter Umständen den weiteren Prozess unmöglich macht.

Die genaue Einhaltung dieses "Prozessfensters" zwischen der Schmelztemperatur und der Rekristallisationstemperatur ist für die Güte der Bauteile maßgeblich. Dabei gelten für die bedruckten und die unbedruckten Bereich verschiedene Randbedingungen. Der Einsatz von monochromatischen Strahlungsquelle erleichtert die Temperaturführung zwischen den beiden Temperaturen erheblich.

Insbesondere in den Ausführungsbespielen wird beschrieben, wie die Vorteile dieser Strahlungsquelle bei beschriebenem Prozess genutzt werden können.

Kurze Beschreibung der Figuren:
Fig. 1: Verfahren nach der Erfindung
Fig. 2: a) Schematische Energieaufnahme- und Abgabekurven eines Pulver wie Polyamid 12, b) Temperaturkurven mit Liquidus- und Soliduslinien des Flächentyps unbedruckte Fläche, c) Temperaturkurven mit Liquidus- und Soliduslinien des Flächentyps bedruckte Fläche
Fig. 3: a) Hochaufgelöste schematische Darstellung der Temperatur des Flächentyps unbedruckte Fläche bei Verwendung einer thermischen Strahlungsquelle im Sinterstrahleraggregat, b) Hochaufgelöste schematische Darstellung der Temperatur des Flächentyps unbedruckte Fläche bei Verwendung einer monochromatischen Strahlungsquelle im Sinterstrahleraggregat.
Fig. 4: a)Anordnung einer LED-Strahlungsquelle mit unterschiedlichen Wellenlängen b) Weitere mögliche Anordnung
Fig. 5: Verfahrensablauf eines erfindungsgemäßen Prozesses mit einer Vorrichtung ohne Overheadstrahler
Fig. 6: Vorrichtung zur Ausführung eines Verfahrens nach der Offenbarung mit einem monochromatischen LED-Sinterstrahler.
Figur 7: Vorrichtung zur Ausführung eines Verfahrens nach der Offenbarung mit einem monochromatischen Sinterstrahler und einem monochromatischen Overheadstrahler.
Figur 8: Umsetzung von Strahlung der Sinterlampe durch ein fluoreszierendes Medium

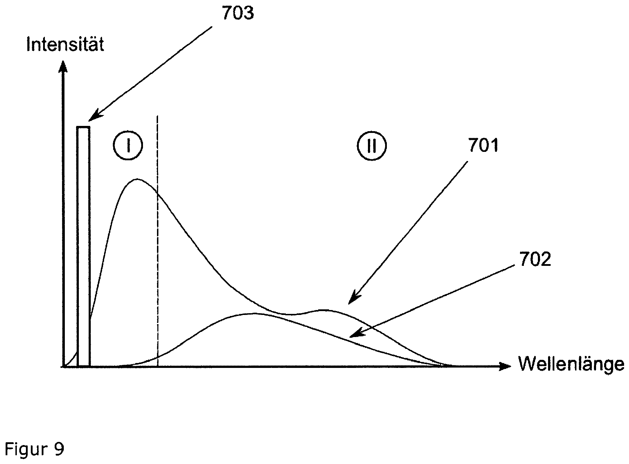

Figur 9: Spektrale Verteilungen verschiedener thermischer Strahlungsquellen und von echt monochromatischen Strahlungsquellen

### Beispiel1: Vorrichtung mit einer Sinterlampe, die LED-Strahler einer Wellenlänge gemäß der Erfindung enthält, und eine thermische Overheadlampe aufweist

Gemäß Figur 1a) beginnt der Bauprozess oder Prozesszyklus mit dem Beschichten der Bauplattform mit einer Pulverlage. Schon während des Beschichtens durch den Beschichter (101) wird das Pulver durch den Overheadstrahler (108), sofern vom Beschichter (101) optisch nicht abgedeckt, erwärmt. Der Sinterstrahler (109), der nur die Strahlung liefert, die gut die bedruckte Fläche heizt, ist in diesem Schritt nicht eingeschaltet.

Der Overheadstrahler (108) enthält zur Regelung der Oberflächentemperatur des Baufeldes eine Messeinrichtung. Idealerweise ist die Messeinrichtung als Pyrometer (508) ausgeführt, das die Temperatur berührungsfrei ermitteln kann. Die Regelung muss berücksichtigen, dass die Messeinrichtung immer wieder durch den Druckkopf (100) und den Beschichter (101) abgeschattet wird. Dies kann durch Abschalten der Messwertgewinnung oder durch unempfindliche Regelkreisparameter erfolgen.

In einem zweiten Schritt wird der Aktivator durch den Druckkopf (100) aufgebracht, der genau auf die Wellenlänge der Strahlungsquelle abgestimmt ist. Das Bild, das vom Druckkopf (100) auf das Partikelmaterial aufgebracht wird, entspricht dem aktuellen Formkörperquerschnitt. Zu Beginn eines Prozesses ist oft eine Grundschicht zu drucken. Hier bedruckt der Druckkopf die volle als Baufläche der zur Verfügung stehenden Fläche.

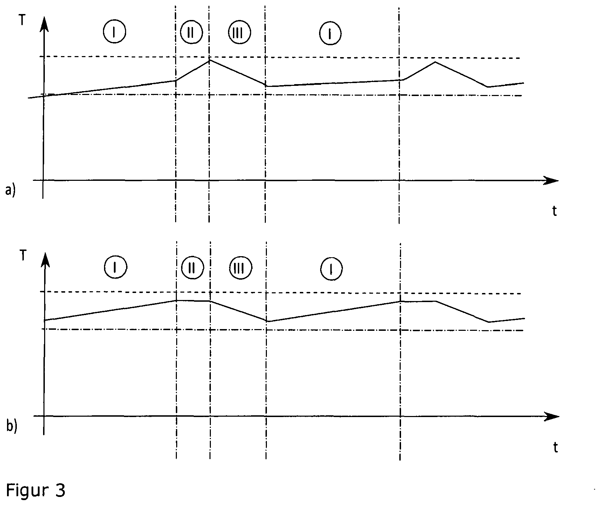

Der dritte Schritt ist die Sinterfahrt. Hierbei wird das Sinterstrahleraggregat (109) eingeschaltet und über das Baufeld geführt. Die Leistung der Strahlungsquelle und die Geschwindigkeit bestimmen die Bestrahlungsleistung auf dem Baufeld. Im Gegensatz zum Stand der Technik erwärmt der Sinterstrahler (500) mit einer Wellenlänge während dieser Fahrt unbedruckte Flächen nicht. Die Temperatur der bedruckten Bereiche steigt also an, während unbedruckte Bereiche durch den Energieverlust durch Strahlung langsam abkühlen (Figur 3b, Bereich II).

Die Sinterstrahler (109; 500) sind LED-Strahler, deren Wellenlängenspektrum eine Breite von 0,2 µm bis 0,1 µm beträgt.

Der vierte Schritt ist das Absenken der Bauplattform (102) um die Stärke einer Pulverschicht (107). Während dieses Vorganges ist das Baufeld zum Overheadstrahler (108) frei und die Temperatur kann nachgeregelt werden. Danach beginnt der Prozesszyklus wieder von vorne mit dem Beschichtungsprozess.

Figur 6 beschreibt eine Vorrichtung die den im Beispiel genannten Prozess realisieren kann. Der Overheadstrahler (108) ist als thermische Strahlungsquelle ausgeführt. Der Sinterstrahler ist aus kleinteiligen LED Einzelstrahlern (400 oder 500) zusammengesetzt. Der Baubehälterboden und die Bauplattform werden über Widerstandheizungen (504) temperiert.

Bei der beispielhaften Vorrichtung sind der Beschichter (101) und das Sinterstrahleraggregat (109) verbunden. Diese Einheit und der Druckkopf (100) können separat über das Baufeld bewegt werden.

Figur 7 zeigt eine besondere Ausführung des Beispiels. Hier wird der Overheadstrahler ebenso mit einer LED-Strahlungsquelle ausgestattet. Damit fällt in der Maschine im Vergleich zu Vorrichtungen des Standes der Technik wesentlich weniger Abwärme an.

### Beispiel 2: Vorrichtung eines Sinterstrahleraggregats, das LED-Strahler mit zwei Wellenlängen enthält, und keine Overheadlampe aufweist

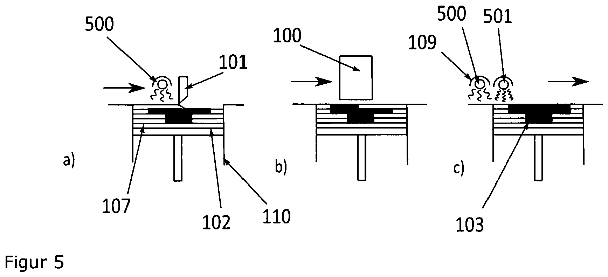

Gemäß Figur 5 beginnt der Bauprozess oder Prozesszyklus mit dem Beschichten der Bauplattform (102) mit einer Pulverlage. Der Sinterstrahler (501) des Aggregats (109), der auch die Strahlung liefert, die gut die unbedruckte Fläche heizt, ist in diesem Schritt eingeschaltet und erwärmt das Pulver auf eine Grundtemperatur unterhalb der Schmelztemperatur aber Oberhalb der Rekristallisationstemperatur. Die Energiezufuhr wird dabei über die Leistung und die Verfahrgeschwindigkeit gesteuert. Günstiger weise wird die erzeugte Temperatur erfasst und auch eingeregelt.

In einem zweiten Schritt wird der Aktivator aufgebracht, der genau auf die Wellenlänge der Strahlungsquelle (500) für die bedruckten Bereiche abgestimmt ist. Das Bild, das vom Druckkopf (100) auf das Pulver aufgebracht wird entspricht dem aktuellen Förmkörper. Zu Beginn eines Prozesses ist oft eine Grundschicht zu drucken. Hier bedruckt der Druckkopf die volle als Baufläche zu Verfügung stehende Fläche.

Der dritte Schritt ist die Sinterfahrt. Hierbei wird das Sinteraggregat (109) eingeschaltet und über das Baufeld geführt. Die Leistung der Strahlungsquelle und die Geschwindigkeit bestimmen die Bestrahlungsleistung auf dem Pulverbett. Im Gegensatz zum Stand der Technik kann das Aggregat mit zwei Wellenlängen (500,501) während dieser Fahrt unbedruckte und bedruckte Flächen gezielt beeinflussen. Die Temperatur der bedruckten Bereiche steigt also an, während in unbedruckten Bereichen der Energieverlust durch Strahlung ausgeglichen werden kann.

Das Sinteraggregat (109) besteht aus LED-Strahlern, deren Wellenlängenspektrum eine Breite von 0,2 µm bis 0,1 µm beträgt.

Der vierte Schritt ist das Absenken der Bauplattform (102) um eine Schichtstärke und wird bei diesem beispielhaften Prozess extrem kurz gehalten. Hier wird nicht geregelt und jede Verzögerung führt zu Energieverlust durch Wärmestrahlung. In der Darstellung wird dieser Schritt deshalb nicht aufgeführt.

### Bezugszeichenliste:

- 100: Druckkopf
- 101: Beschichter
- 102: Bauplattform
- 103: Bauteile
- 107: Schichten
- 108: Overheadstrahler
- 109: Sinterstrahleraggregat
- 110: Baubehälter
- 400: monochromatischer Strahler in Sinteraggregat
- 401: monochromatischer Strahler unterschiedlicher Wellenlänge in Sinteraggregat
- 402: Sinterstrahleraggregat mit Strahlern in verschachtelter Bauweise
- 500: monochromatische Sinterstrahler
- 501: Sinterstrahler einer anderen Wellenlänge
- 503: Isolierung Baubehälter
- 504: Widerstandsheizung bzw. Heizwendel
- 506: Isolierung Bauplattform nach unten
- 507: Widerstandsheizung Beschichter
- 508: Pyrometer
- 601: Material mit fluoreszierender Schicht
- 602: Durch fluoreszierende Schicht emittierte Sekundärstrahlung
- 603: Overheadstrahler, ausgeführt mittels monochromatischer Strahler
- 604: Strahlung auf fluoreszierende Schicht
- 701: Typisches Strahlungsspektrum herkömmlicher Strahler mit Sekundärpeak
- 702: Strahlungsspektrum herkömmlicher Strahler bei geringerer Leistung
- 703: Monochromatische Strahlung

## Patentansprüche

1. Verfahren zum Herstellen von 3D-Formteilen (103), wobei partikelförmiges Baumaterial in einer definierten Schicht (107) mittels Beschichter (101) auf ein Baufeld aufgetragen wird, selektiv eine oder mehrere Flüssigkeiten oder Partikelmaterial eines oder mehrerer Absorber aufgebracht werden, mit geeigneten Mitteln ein Energieeintrag erfolgt und so eine selektive Verfestigung der mit Absorber bedruckten Bereiche bei einer Verfestigungstemperatur oder Sintertemperatur oberhalb der Schmelztemperatur des Pulvers erfolgt, das Baufeld um eine Schichtstärke abgesenkt oder der Beschichter (101) um eine Schichtstärke angehoben wird, diese Schritte wiederholt werden bis das gewünschte 3D-Formteil (103) erzeugt ist, **dadurch gekennzeichnet, dass** der Energieeintrag von bedruckten Flächen durch einen Sinterstrahler (109) mittels LED in einem engen Wellenlängenspektrum mit einer Breite von 0,2 µm bis 0,1 µm erzeugt wird.

2. Verfahren nach Anspruch 1, wobei ein Overheadstrahler (108) für eine Grunderwärmung und ein Sinterstrahler (109) für die Erwärmung der bedruckten Flächen über die Schmelztemperatur verwendet werden.

3. Verfahren nach Anspruch 1 oder 2, wobei ein Sinterstrahler (109), der eine Wellenlänge für die Erwärmung der bedruckten Flächen über die Schmelztemperatur aufweist, und der eine Wellenlänge für die Erwärmung der unbedruckten Flächen über die Rekristallisationstemperatur aufweist, verwendet wird.

4. Verfahren nach Anspruch 1 - 3, wobei kein statischer Overheadstrahler (108) verwendet wird, oder/und wobei ein statischer Overheadstrahler (108), der eine Wellenlänge für die Erwärmung der bedruckten Flächen über die Schmelztemperatur aufweist, und der eine Wellenlänge für die Erwärmung der unbedruckten Flächen über die Rekristallisationstemperatur aufweist, verwendet wird.

5. Verfahren nach einem der vorhergehenden Ansprüche, wobei kein beweglicher Sinterstrahler (109) verwendet wird.

6. Verfahren nach einem der vorhergehenden Ansprüche, wobei die Leistung der jeweiligen Elemente verstellt werden kann und eine Regelung der jeweiligen Erwärmung erfolgen kann.

7. Verfahren nach einem der vorhergehenden Ansprüche, wobei zur gezielten Erwärmung von bedruckten und unbedruckten Flächen selektives An- bzw. Abschalten der Strahlungsquellen während einer Überfahrt über die Baufläche vorgenommen wird.

8. Verfahren nach einem der vorhergehenden Ansprüche, wobei selektives An- bzw. Abschalten von stationären Strahlungsquellen vorgenommen wird.

9. Verfahren nach einem der vorhergehenden Ansprüche, wobei der Absorber eine Flüssigkeit ist, vorzugsweise eine ölbasierte Tinte, die Kohlenstoffpartikel enthält.

10. Verfahren nach einem der vorhergehenden Ansprüche, wobei einer Schmelztemperatur von 180 - 190 °C, vorzugsweise von 186 °C und/oder einer Rekristallisationstemperatur von 140 - 150 °C, vorzugsweise von 145 °C verwendet wird.

11. Verfahren nach einem der vorhergehenden Ansprüche, wobei eine Erhitzung derart stattfindet, dass nur die mit Absorber bedruckten Bereiche sich durch partielles Schmelzen oder Sintern verbinden, oder/und
wobei das Baumaterial als Pulver oder als Dispersion verwendet wird, oder/und
wobei das Baufeld und/oder das aufgetragene Baumaterial temperiert werden, oder/und
wobei der Absorber strahlungsabsorbierende Bestandteile, Weichmacher für das partikelförmige Baumaterial oder/und ein oder mehrere Stoffe zur Störung der Rekristallisierung umfasst.

12. Verfahren nach einem der vorhergehenden Ansprüche, wobei die Menge des oder der Absorber über Graustufen des Druckkopfes (100) oder Ditheringverfahren reguliert wird.

13. Verfahren nach einem der vorhergehenden Ansprüche, wobei die Flüssigkeit mittels eines oder mehrerer Druckköpfe (100) selektiv aufgebracht wird.

14. Verfahren nach einem der vorhergehenden Ansprüche, wobei der oder die Druckköpfe (100) in ihrer Tropfenmasse einstellbar sind.

15. Verfahren nach einem der vorhergehenden Ansprüche, wobei der oder die Druckköpfe (100) die Flüssigkeit in einer oder in beiden Verfahrrichtungen selektiv aufbringen, oder/und wobei das partikelförmige Baumaterial selektiv verfestigt, vorzugsweise selektiv verfestigt und gesintert wird.

## Claims

1. A method for producing 3D mouldings (103), wherein
particulate construction material is applied onto a construction field in a defined layer (107) by means of a recoater (101), one or more liquids or particulate material of one or more absorbers is/are selectively applied, energy is input by suitable means, resulting in selective solidification of the areas printed with absorber at a solidification temperature or sintering temperature above the melting temperature of the powder, the construction field Is lowered by one layer thickness, or the recoater (101) is raised by one layer thickness, and these steps are repeated until the desired 3D moulding is produced, **characterized in that** the energy input of printed areas is effected by a sintering radiator (109) by means of LED within a narrow wavelength spectrum having a width of 0.2 µm to 0,1 µm.

2. The method according to claim 1, wherein an overhead radiator (108) is used for basic heating and a sintering radiator (109) is used to heat the printed areas to a temperature above the melting temperature.

3. The method according to claim 1 or 2, wherein a sintering radiator (109) is used which has a wavelength for heating the printed areas to a temperature above the melting temperature and a wavelength for heating the unprinted areas to a temperature above the recrystallisation temperature.

4. The method according to claims 1 to 3, wherein no static overhead radiator (108) is used, or/and wherein a static overhead radiator (108) having a wavelength for heating the printed surfaces to a temperature above the melting temperature and having a wavelength for heating the unprinted surfaces to a temperature above the recrystallisation temperature is used.

5. The method according to any one of the preceding claims, wherein no movable sintering radiator (109) is used.

6. The method according to any one of the preceding claims, wherein the power of the respective elements can be adjusted and the respective heating can be regulated.

7. The method according to any one of the preceding claims, wherein, for selective heating of printed and unprinted areas, selective activation and deactivation of the sources of radiation is performed during a pass over the construction surface.

8. The method according to any one of the preceding claims, wherein selective activation and deactivation of stationary sources of radiation is performed.

9. The method according to any one of the preceding claims, wherein the absorber is a liquid, preferably an oil-based ink containing carbon particles.

10. The method according to any one of the preceding claims, wherein a melting temperature of 180-190 °C, preferably 186 °C, and/or a recrystallisation temperature of 140-150 °C, preferably 145 °C, is used.

11. The method according to any one of the preceding claims, wherein heating takes place such that only the areas printed with absorber connect by partial melting or sintering, or/and
wherein the construction material is used in the form of a powder or dispersion, or/and
wherein the temperature of the construction field and/or the construction material applied is controlled, or/and
wherein the absorber comprises radiation-absorbing components, plasticizers for the particulate construction material or/and one or more substances interfering with recrystallization.

12. The method according to any one of the preceding claims, wherein the amount of the absorber or absorbers is regulated via grayscale values of the print head (100) or via dithering methods.

13. The method according to any one of the preceding claims, wherein the liquid is selectively applied by means of one or more print heads (100).

14. The method according to any one of the preceding claims, wherein the print head or print heads (100) is/are adjustable in terms of droplet mass.

15. The method according to any one of the preceding claims, wherein the print head or print heads (100) selectively apply the liquid in one or both directions of travel, or/and wherein the particulate construction material is selectively solidified, preferably selectively solidified and sintered.

## Revendications

1. Procédé de fabrication de pièces 3D (103), dans lequel
un matériau de construction particulaire est appliqué en une couche définie (107) sur un champ de construction au moyen d'un enducteur (101), un ou plusieurs liquides ou un matériau particulaire d'un ou plusieurs absorbeurs sont appliqués sélectivement, un apport d'énergie est effectué par des moyens appropriés, ce qui permet une solidification sélective des zones imprimées avec l'absorbeur à une température de solidification ou de frittage supérieure à la température de fusion de la poudre, le champ de construction est abaissé d'une épaisseur de couche ou l'enducteur (101) est élevé d'une épaisseur de couche, ces étapes sont répétées jusqu'à ce que la pièce 3D souhaitée (103) soit produite, **caractérisé en ce que** l'apport d'énergie de surfaces imprimées est généré par un radiateur de frittage (109) au moyen de LED dans un spectre de longueur d'onde étroit d'une largeur de 0,2 µm à 0,1 µm.

2. Procédé selon la revendication 1, dans lequel on utilise un radiateur installé en haut (108) pour un chauffage de base et un radiateur de frittage (109) pour le chauffage des surfaces imprimées à une température au-dessus de la température de fusion.

3. Procédé selon la revendication 1 ou 2, dans lequel on utilise un radiateur de frittage (109) qui présente une longueur d'onde pour le chauffage des surfaces imprimées à une température au-dessus de la température de fusion, et qui présente une longueur d'onde pour le chauffage des surfaces non imprimées à une température au-dessus de la température de recristallisation.

4. Procédé selon les revendications 1 à 3, dans lequel on n'utilise pas de radiateur statique installé en haut (108), ou/et dans lequel on utilise un radiateur statique installé en haut (108) qui présente une longueur d'onde pour le chauffage des surfaces imprimées à une température au-dessus de la température de fusion, et qui présente une longueur d'onde pour le chauffage des surfaces non imprimées à une température au-dessus de la température de recristallisation.

5. Procédé selon l'une quelconque des revendications précédentes, dans lequel on n'utilise pas de radiateur de frittage mobile (109).

6. Procédé selon l'une quelconque des revendications précédentes, dans lequel la puissance des éléments respectifs peut être ajustée et une régulation du chauffage respectif peut être effectuée.

7. Procédé selon l'une quelconque des revendications précédentes, dans lequel, pour le chauffage ciblé de surfaces imprimées et non imprimées, on procède à l'allumage ou à l'arrêt sélectif des sources de rayonnement pendant un passage sur la surface de construction.

8. Procédé selon l'une quelconque des revendications précédentes, dans lequel on procède à l'allumage ou à l'arrêt sélectif de sources de rayonnement stationnaires.

9. Procédé selon l'une quelconque des revendications précédentes, dans lequel l'absorbeur est un liquide, de préférence une encre à base d'huile, contenant des particules de carbone.

10. Procédé selon l'une quelconque des revendications précédentes, dans lequel on utilise une température de fusion de 180 - 190 °C, de préférence 186 °C, et/ou une température de recristallisation de 140 - 150 °C, de préférence 145 °C.

11. Procédé selon l'une quelconque des revendications précédentes, dans lequel le chauffage s'effectue de telle manière que seules les zones imprimées avec l'absorbeur sont reliées par fusion partielle ou frittage partiel, ou/et
dans lequel le matériau de construction est utilisé sous forme de poudre ou de dispersion, ou/et
dans lequel le champ de construction et/ou le matériau de construction appliqué sont tempérés, ou/et
dans lequel l'absorbeur comprend des composants absorbant les rayonnements, des plastifiants pour le matériau de construction particulaire ou/et une ou plusieurs substances pour perturber la recristallisation.

12. Procédé selon l'une quelconque des revendications précédentes, dans lequel la quantité dudit ou desdits absorbeur(s) est réglée par l'échelle de gris de la tête d'impression (100) ou un procédé de tramage.

13. Procédé selon l'une quelconque des revendications précédentes, dans lequel le liquide est appliqué sélectivement au moyen d'une ou plusieurs têtes d'Impression (100).

14. Procédé selon l'une quelconque des revendications précédentes, dans lequel la masse des gouttes de la tête d'Impression ou des têtes d'impression (100) est réglable.

15. Procédé selon l'une quelconque des revendications précédentes, dans lequel la ou les têtes d'impression (100) appliquent du liquide sélectivement dans un sens ou dans les deux sens de déplacement.
